# EUROPÄISCHE PATENTSCHRIFT

(11) **EP 0 792 401 B1**
(45) Veröffentlichungstag und Bekanntmachung des Hinweises auf die Patenterteilung: **25.11.1998**
(21) Anmeldenummer: 95936372.2
(22) Anmeldetag: 14.11.1995
(51) Int. Cl.: E03C 1/284, F16L 17/025

(54) **UNTERPUTZSIFON**
CONCEALED SIPHON
SIPHON ENCASTRE

(30) Priorität: 15.11.1994 AT 2113/94
(43) Veröffentlichungstag der Anmeldung: 03.09.1997
(73) Patentinhaber: Hutterer & Lechner Kommanditgesellschaft, A-2325 Himberg b. Wien (AT)
(72) Erfinder: RITTMANN, Anton, A-2320 (AT)
(74) Vertreter: Kopecky, Helmut, Dipl.-Ing. Kopecky & Schwarz Patentanwälte
(86) Internationale Anmeldenummer: AT9500217
(87) Internationale Veröffentlichungsnummer: WO9615330

(56) Entgegenhaltungen:
- WO-A-90/08287
- DE-A- 1 658 288
- DE-A- 3 109 384
- DE-C- 3 447 098
- DE-U- 8 902 168
- DE-U- 8 906 228
- FR-A- 1 469 731

## Beschreibung

Die Erfindung betrifft einen Unterputzsifon mit einem eine Einlauföffnung und eine Ausströmöffnung aufweisenden Gehäuse und einem ins Gehäuse einsetzbaren L-förmig ausgebildeten Tauchrohr, wobei ein etwa horizontaler Einlauf-Rohrteil des Tauchrohres von der an einer Seitenwand des Gehäuses angeordneten Einlauföffnung in einen etwa vertikal angeordneten Tauch-Rohrteil des Tauchrohres mündet und der Einlauf-Rohrteil leitungsgemäß an ein Ableitungsrohr, wie an ein Waschtisch-Ableitungsrohr, dichtend anschließbar ist und wobei die Ausströmöffnung des Gehäuses in einen Ablaufkanal mündet und das Tauchrohr sowohl gegenüber dem Gehäuse an dessen Einlauföffnung als auch gegenüber dem Ableitungsrohr abgedichtet ist.

Ein Unterputzsifon dieser Art ist aus dem DE-U - 89 06 228 bekannt. Hierbei ist das Tauchrohr gegenüber dem Gehäuse mittels einer ersten und gegenüber dem Ableitungsrohr mittels einer zweiten Ringdichtung gedichtet.

Ein Unterputzsifon ähnlicher Art ist aus der DE-C - 34 47 098 bekannt. Bei diesem Unterputzsifon ist das Tauchrohr zwischen der Einlauföffnung des Gehäuses und einen an das Tauchrohr, d.h. dessen Einlauf-Rohrteil, angesetzten Rohrstutzen geklemmt, wobei zur Klemmung am Gehäuse eine einen Gehäuseansatz umgreifende Überwurfmutter festgeschraubt ist, die mit einem nach innen gerichteten Randflansch einen nach außen gerichteten Randflansch des Rohrstutzens übergreift. Diese Befestigungsart und Abdichtung des Tauchrohres gegenüber dem Gehäuse weist den Nachteil auf, daß in der den Unterputzsifon tragenden Wand ein Raum geschaffen werden muß, der das Anbringen der Überwurfmutter von Hand aus oder mittels eines Werkzeuges ermöglicht. Dieser die Überwurfmutter umgebende Freiraum muß wiederum von einer Abdeckblende überdeckt werden. Der Aus- und Einbau des Tauchrohres bzw. das Reinigen des Sifones sind hierbei aufwendig.

Die Erfindung bezweckt die Vermeidung dieser Nachteile und Schwierigkeiten und stellt sich die Aufgabe, einen Unterputzsifon der eingangs beschriebenen Art zu schaffen, der komplett in die Wand eingemauert werden kann, bei dem also zwischen Gehäuse und Wand kein Freiraum vorgesehen sein muß. Hierbei soll jedoch eine leichte Anbringung des in das Gehäuse mündenden Ableitungsrohres möglich sein, wobei insbesondere eine absolute Dichtheit zwischen dem Ableitungsrohr und dem Gehäuse gegeben ist. Eine Reinigung des Sifones soll auf kurzem Weg und ohne handwerkliches Geschick möglich sein.

Diese Aufgabe wird erfindungsgemäß dadurch gelöst, daß zur Abdichtung des Tauchrohres gegenüber dem Gehäuse und dem Ableitungsrohr eine einzige Ringdichtung aus weichelastischem Material vorgesehen ist, die eine Stecköffnung für das Ableitungsrohr aufweist und entweder einstückig mit dem Tauchrohr aus weichelastischem Material oder als vom Tauchrohr separater Bauteil ausgebildet ist, der auf das Tauchrohr aus steifem Material aufsteckbar ist.

Hierbei ist zum einfachen Ansetzen des Ablaufrohres vorzugsweise die Stecköffnung mit mindestens einer nach innen gerichteten und sich an das Ableitungsrohr außen anpressenden Ringflansch-Dichtlippe versehen.

Zur Gewährleistung des richtigen Sitzes der Ringdichtung am Gehäuse weist vorteilhaft die Ringdichtung einen nach außen gerichteten Ring-Dichtflansch auf, der die Gehäusewand an der Einlauföffnung übergreift.

Gemäß einer besonders zweckmäßigen Ausführungsform besteht das Tauchrohr aus Gummi.

Vorteilhaft weist hierbei die Ringdichtung eine nach außen offene und konzentrisch zur Mittelachse der Einlauföffnung umlaufende Ringnut auf, in die ein Stützring von außen her einsetzbar ist. Der Stützring bewirkt einen sicheren Sitz der Ringdichtung, auch wenn sie aus einem besonders weichen Material hergestellt ist.

Vorzugsweise weist der Stützring ein Winkelprofil auf, wobei der Stützring zweckmäßig einen konzentrisch zur Mittelachse der Einlauföffnung angeordneten Ringteil, der in die korrespondierend ausgebildete Ringnut der Ringdichtung einsetzbar ist, und weiters einen sich etwa rechtwinkelig hierzu und nach außen erstreckenden Ringflansch aufweist. Dies ergibt eine größere Steifheit des Stützringes, der dann besonders dünn und leicht anbringbar ausgebildet sein kann. Zudem gewährleistet das Winkelprofil des Stützringes dessen sicheren ordnungsgemäßen Sitz, der zudem leicht von außen optisch kontrollierbar ist.

Vorteilhaft ist der Ringflansch des Stützringes im eingebauten Zustand von einem Ringflansch der Ringdichtung von innen zumindest teilweise übergriffen, wodurch ein Einrasten des Stützringes in der Ringdichtung und damit dessen exakter Sitz auch bei Manipulationen am in die Ringdichtung eingesetzten Ableitungsrohr (z.B. bei dessen Einsetzen oder Entfernen) gewährleistet ist.

Zweckmäßig ist der Stützring mit Manipulationsansätzen, insbesondere zum Ansetzen eines Montagewerkzeuges bzw. Demontagewerkzeuges, versehen, wobei vorteilhaft die Manipulationsansätze als sich in Richtung der Mittelachse der Einlauföffnung erstreckende Nasen ausgebildet sind, wobei mindestens zwei Nasen um den Umfang des Stützringes gleichmäßig verteilt angeordnet sind. Hierdurch gestaltet sich das Einsetzen und auch das Entfernen des Stützringes besonders einfach.

Ist das Tauchrohr aus einem relativ steifen Material gebildet, weist der Einlauf-Rohrteil des Tauchrohres einen sich etwa konzentrisch zur Mittelachse der Einlauföffnung erstreckenden Endteil auf, auf den die Ringdichtung von außen her aufschiebbar ist, wobei die Ringdichtung mit einer zum Endteil korrespondierend angeordneten umlaufenden Ringnut versehen ist und der Endteil in die Ringnut einsetzbar ist. Hierbei bildet der Endteil des Einlauf-Rohrteiles des Tauchrohres selbst den Stützring zur Versteifung der aus einem weichelastischen Material hergestellten Ringdichtung.

Um auch hier einen sicheren Sitz der Ringdichtung auch dann zu gewährleisten, wenn das Ablaufrohr in die Ringdichtung eingesetzt oder aus dieser entfernt wird, ist zweckmäßig der Endteil mit einer umlaufenden Dicht-Stufe versehen, wobei vorteilhaft die Dicht-Stufe von einem umlaufenden Stufenflansch gebildet ist und die Ringnut hierzu korrespondierend ausgebildet ist.

Gemäß einer bevorzugten Ausführungsform ist der Tauch-Rohrteil des Tauchrohres integral mit einem Steig-Rohrteil nach der Art kommunizierender Gefäße unter Bildung eines Sifons ausgebildet. Diese Ausführungsform bietet den Vorteil, daß nach Entfernen des Tauchrohres und damit des mit diesem integral zusammenhängenden Steig-Rohrteiles der Ablaufkanal durch die Einlauföffnung des Gehäuses direkt zugänglich ist, u.zw. ohne Behinderung durch eine im Gehäuse vorgesehene Stauwand, wie dies bei einem Unterputzsifon gemäß dem Stand der Technik, beispielsweise der DE-C- 34 47 098, der Fall ist. Eine Putzfeder kann dann direkt über das Gehäuse in den Ablaufkanal eingeführt werden, u.zw. ohne wesentliche Verformungen zu erleiden.

Vorteilhaft hat die Einlauföffnung einen Innendurchmesser, der ein Einsetzen und Entfernen des Tauchrohres bzw. des integral mit diesem verbundenen Steig-Rohrteiles in das bzw. aus dem Gehäuse ermöglicht, gegebenenfalls unter elastischer Verformung des Tauchrohres bzw. des mit ihm integral zusammenhängenden Steig-Rohrteiles.

Um das einfache Einführen und Entfernen des Tauchrohres bzw. des mit ihm integral zusammenhängenden Steig-Rohrteiles zu gewährleisten, weist der Einlauf-Rohrteil des Tauchrohres einen Endteil mit größerem Durchmesser auf als der übrige Einlauf-Rohrteil. Hierbei dient der zwischen dem Endteil mit größerem Durchmesser und dem in die Ringdichtung einsetzbaren Ableitungsrohr vorhandene Raum zur Anordnung der Ringdichtung, ohne daß hierdurch eine Durchmesserverengung bzw. eine Querschnittsverminderung und damit ein Stau des Abwassers verursacht wird.

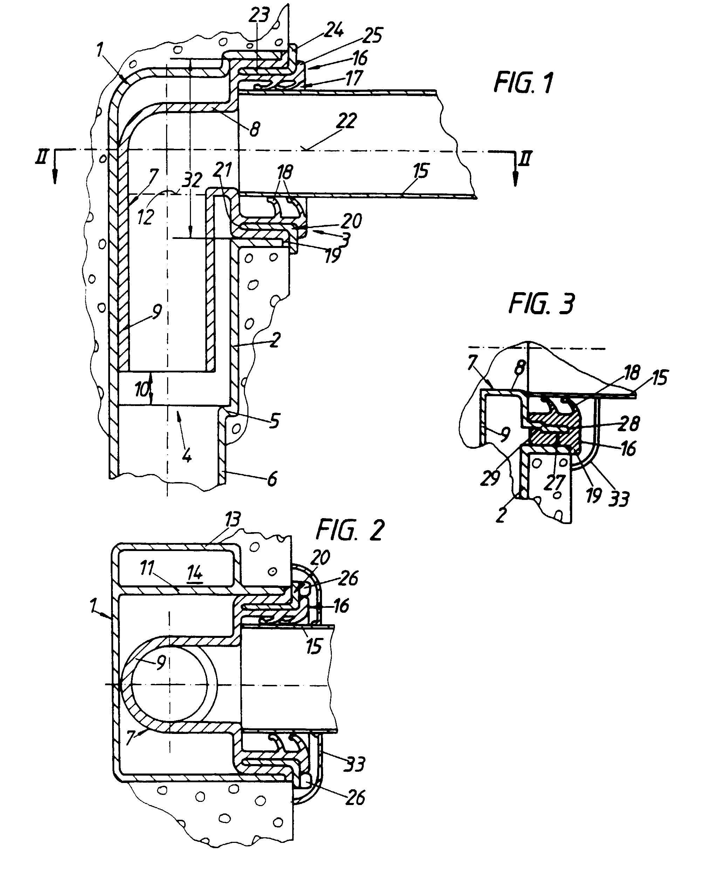

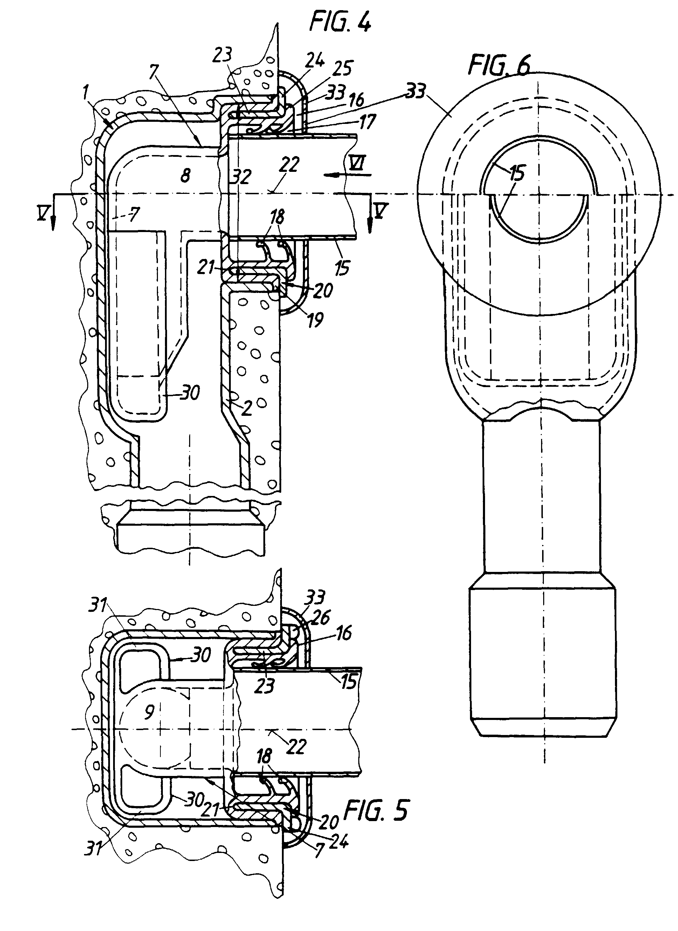

Die Erfindung ist nachfolgend anhand mehrerer in der Zeichnung dargestellter Ausführungsformen näher erläutert, wobei Fig. 1 einen Vertikalschnitt durch einen in eine Wand eingebauten Unterputzsifon und Fig. 2 eine Darstellung eines gemäß der Linie II-II der Fig. 1 geführten Schnittes zeigen. Fig. 3 veranschaulicht in zu Fig. 1 analoger Darstellung, wobei hier nur ein Detail der Fig. 1 wiedergegeben ist, eine geänderte Ausführungsform. In den Fig. 4, 5 und 6 ist eine weitere Ausführungsform veranschaulicht, wobei die Fig. 4 und 5 in zu den Fig. 1 und 2 analoger Darstellung die weitere Ausführungsform im Vertikalschnitt und Horizontalschnitt zeigen, und die Fig. 6 eine Ansicht in Richtung des Pfeiles VI der Fig. 4 zeigt.

Die in der Zeichnung dargestellten Ausführungsformen betreffen Unterputzsifone, wie sie beispielsweise für einen Waschtisch, etc., verwendbar sind. Jeder der Einbausifone weist ein aus Kunststoff gefertigtes Gehäuse 1 auf, das an einer Seitenwand 2 mit einer Einlauföffnung 3 versehen ist. Eine Ausströmöffnung 4 befindet sich im Boden 5 des Gehäuses 1. An diese Ausströmöffnung 4 schließt ein Stutzen 6 an, der vorteilhaft mit dem Gehäuse 1 einteilig hergestellt ist und der über einen nicht näher dargestellten Ablaufkanal schiebbar ist.

In das Gehäuse 1 ist ein Tauchrohr 7 eingesetzt, u.zw. durch die Einlauföffnung 3. Dieses Tauchrohr 7 ist L-förmig ausgebildet und weist einen etwa horizontal verlaufenden Einlauf-Rohrteil 8 auf, der in einen etwa vertikal liegenden Tauch-Rohrteil 9 übergeht, wobei das untere Ende des Tauch-Rohrteiles 9 im Abstand 10 über dem Boden 5 des Gehäuses 1 zu liegen kommt. Vom Boden 5 des Gehäuses 1 ragt eine Stauwand 11 vertikal nach oben, wobei sich der obere Rand 12 der Stauwand 11 etwa in Höhe des unteren Umfanges des Einlauf-Rohrteiles 8 des Tauchrohres 7 oder knapp darunter befindet. Das Tauchrohr 7 bildet somit zusammen mit der Stauwand einen als Geruchssperre dienenden Wassersack. Das Überlaufwasser, das über den oberen Rand 12 der Stauwand 11 übertritt, läuft durch den zwischen der Stauwand 11 und der Gehäuseseitenwand 13 liegenden vertikal nach unten führenden Kanal 14 in Richtung zur Ausströmöffnung 4 und über diese in den Ablaufkanal.

Das freie Ende des Einlauf-Rohrteiles 8 des Tauchrohres 7 ist gegenüber der Einlauföffnung 3 und einem in das Gehäuse 1 führenden Ableitungsrohr 15 mittels einer einzigen Ringdichtung 16 aus weichelastischem Material abgedichtet. Gemäß den in den Fig. 1 und 2 und 4 bis 6 dargestellten Ausführungsformen ist die Ringdichtung 16 integral mit dem Tauchrohr 7 ausgebildet. Aus diesem Grund sind das Tauchrohr 7 und die Ringdichtung 16 aus einem relativ weichen und elastisch verformbaren Material, wie beispielsweise Gummi, erzeugt.

Die Ringdichtung 16 weist eine Stecköffnung 17 für das Ableitungsrohr 15 auf, wobei die Stecköffnung 17 mit zwei nach innen gerichteten und sich an das Ablaufrohr 15 außen anpressenden Ringflansch-Dichtlippen 18 versehen ist

Die Ringdichtung 16 übergreift mit einem nach außen gerichteten Ring-Dichtflansch 19 die Gehäusewand 2, so daß der richtige Sitz der Ringdichtung 16 und damit auch des mit dieser integral verbundenen Tauchrohres 7 gesichert ist. Zur Sicherung der richtigen Lage der Ringdichtung 16 beim Einführen bzw. Abziehen des Ableitungsrohres 15 ist die Ringdichtung 16 mit einem Stützring 20 verstärkt, der von außen her in eine nach außen offene und konzentrisch zur Mittelachse 22 der Einlauföffnung 3 umlaufende Ringnut 21 der Ringdichtung 16 einsetzbar ist Der Stützring 20 elbst ist als Winkelprofil ausgebildet, wobei er mit einem sich konzentrisch zur Mittelachse 22 der Einlauföffnung 3 angeordneten Ringteil 23 in die korrespondierend ausgebildete Ringnut 21 erstreckt, und er weist weiters einen sich etwa rechtwinkelig hierzu und nach außen erstreckenden Ringflansch 24 auf. Dieser Ringflansch 24 des Stützringes 20 ist im eingebauten Zustand von einem sich ebenfalls nach außen in radialer Richtung erstreckenden Ringflansch 25 der Ringdichtung 16 von innen her zumindest teilweise übergriffen. Hierdurch ist der sichere Sitz des Stützringes 20 gewährleistet.

Der Stützring 20 selbst weist sich in Richtung der Mittelachse 22 der Einlauföffnung 3 erstreckende Manipulationsansätze 26, die als Nasen ausgebildet sind, auf. Diese Nasen, mindestens zwei an der Zahl, sind um den Umfang des Stützringes 20 gleichmäßig verteilt angeordnet.

Gemäß der in Fig. 3 dargestellten Ausführungsform ist das Tauchrohr 7 aus einem steifen Material, beispielsweise aus Kunststoff, gebildet. Aus diesem Grund ist die Ringdichtung 16 als separater Bauteil ausgebildet und von außen her auf einen Endteil 27 des Einlauf-Rohrteiles 8 des Tauchrohres 7 aufsteckbar. Zu diesem Zweck ist die Ringdichtung 16 mit einer zum Endteil 27 korrespondierend angeordneten umlaufenden Ringnut 28 versehen, in die der Endteil 27 einsetzbar ist. Der Endteil 27 des Tauchrohres 7 bildet hierbei eine Stützeinrichtung für die aus weichem elastischem Material gebildete Ringdichtung 16.

Um hierbei einen unverschiebbaren bzw. schwer verschiebbaren Sitz der Ringdichtung am Endteil des Tauchrohres zu sichern, sind der Endteil mit einem umlaufenden Stufenflansch 29 versehen und die Ringnut 28 hierzu korrespondierend ausgebildet.

Gemäß der in den Fig. 4 bis 6 dargestellten Ausführungsform ist der Tauch-Rohrteil 9 integral mit einem Steig-Rohrteil 30 nach der Art kommunizierender Gefäße ausgebildet, wodurch im Inneren des Gehäuses 1 ein aus dem Gehäuse 1 ausbaubarer Teil, der den die Geruchssperre bildenden Wassersack aufnimmt, gebildet ist. Der Steig-Rohrteil 30 ist von zwei diametral zum Tauch-Rohrteil 9 angeordneten Halbschalen 31 gebildet, wobei diese Steigrohr-Halbschalen 31 in einer Ebene senkrecht zur Mittelachse 22 der Einlauföffnung 3 des Gehäuses 1 angeordnet sind.

Das integral mit den Steigrohr-Halbschalen 31 ausgebildete Tauchrohr 7 kann sowohl aus weichelastischem Material als auch aus einem steiferen Material gebildet sein, wobei im letzteren Fall eine separate Ringdichtung 16 gegenüber dem Gehäuse gemäß Fig. 3 Verwendung finden kann.

Die Einlauföffnung 3 weist einen Innendurchmesser 32 auf, der ein Einsetzen und Entfernen des Tauchrohres 7 bzw. des integral mit diesem verbundenen Steig-Rohrteiles 30 in das bzw. aus dem Gehäuse 1 ermöglicht, gegebenenfalls unter elastischer Verformung des Tauchrohres 7 bzw. des Steig-Rohrteiles 30.

Der Einlauf-Rohrteil 8 des Tauchrohres 7 weist vorteilhaft einen Endteil 27 mit größerem Durchmesser auf als der übrige Einlauf-Rohrteil 8, wobei der Durchmessersprung zur Anordnung der Ringdichtung 16 genutzt werden kann, ohne daß eine Verengung des freien Querschnittes des Ableitungsrohres 15 bei dessen Einmündung in den Einlauf-Rohrteil 8 des Tauchrohres 7 gegeben ist. Mittels einer Abdeckblende 33 ist die Ringdichtung 16 geschützt untergebracht.

## Patentansprüche

1. Unterputzsifon mit einem eine Einlauföffnung (3) und eine Ausströmöffnung (4) aufweisenden Gehäuse (1) und einem ins Gehäuse (1) einsetzbaren L-förmig ausgebildeten Tauchrohr (7), wobei ein etwa horizontaler Einlauf-Rohrteil (8) des Tauchrohres (7) von der an einer Seitenwand (2) des Gehäuses (1) angeordneten Einlauföffnung (3) in einen etwa vertikal angeordneten Tauch-Rohrteil (9) des Tauchrohres (7) mündet und der Einlauf-Rohrteil (8) leitungsgemäß an ein Ableitungsrohr (15), wie an ein Waschtisch-Ableitungsrohr, dichtend anschließbar ist und wobei die Ausströmöffnung (4) des Gehäuses (1) in einen Ablaufkanal mündet und das Tauchrohr (7) sowohl gegenüber dem Gehäuse (1) an dessen Einlauföffnung (3) als auch gegenüber dem Ableitungsrohr (15) abgedichtet ist, dadurch gekennzeichnet, daß zur Abdichtung des Tauchrohres (7) gegenüber dem Gehäuse (1) und dem Ableitungsrohr (15) eine einzige Ringdichtung aus weichelastischem Material vorgesehen ist, die eine Stecköffnung (17) für das Ableitungsrohr (15) aufweist und entweder einstückig mit dem Tauchrohr (7) aus weichelastischem Material oder als vom Tauchrohr separater Bauteil ausgebildet ist, der auf das Tauchrohr (7) aus steifem Material aufsteckbar ist.

2. Unterputzsifon nach Anspruch 1, dadurch gekennzeichnet, daß die Stecköffnung (17) mit mindestens einer nach innen gerichteten und sich an das Ableitungsrohr (15) außen anpressenden Ringflansch-Dichtlippe (18) versehen ist.

3. Unterputzsifon nach Anspruch 1 oder 2, dadurch gekennzeichnet, daß die Ringdichtung (16) einen nach außen gerichteten Ring-Dichtflansch (19) aufweist, der die Gehäusewand (2) an der Einlauföffnung (3) übergreift.

4. Unterputzsifon nach einem oder mehreren der Ansprüche 1 bis 3, dadurch gekennzeichnet, daß das Tauchrohr (7) aus Gummi besteht.

5. Unterputzsifon nach einem oder mehreren der Ansprüche 1 bis 4, dadurch gekennzeichnet, daß die Ringdichtung (16) eine nach außen offene und konzentrisch zur Mittelachse (22) der Einlauföffnung (3) umlaufende Ringnut (21) aufweist, in die ein Stützring (20) von außen her einsetzbar ist.

6. Unterputzsifon nach Anspruch 5, dadurch gekennzeichnet, daß der Stützring (20) ein Winkelprofil aufweist.

7. Unterputzsifon nach Anspruch 6, dadurch gekennzeichnet, daß der Stützring (20) einen konzentrisch zur Mittelachse (22) der Einlauföffnung (3) angeordneten Ringteil (23), der in die korrespondierend ausgebildete Ringnut (21) der Ringdichtung (18) einsetzbar ist, und weiters einen sich etwa rechtwinkelig hierzu und nach außen erstreckenden Ringflansch (24) aufweist.

8. Unterputzsifon nach Anspruch 7, dadurch gekennzeichnet, daß der Ringflansch (24) des Stützringes (20) im eingebauten Zustand von einem Ringflansch (25) der Ringdichtung (16) von innen zumindest teilweise übergriffen ist.

9. Unterputzsifon nach einem oder mehreren der Ansprüche 5 bis 8, dadurch gekennzeichnet, daß der Stützring (20) mit Manipulationsansätzen (26), insbesondere zum Ansetzen eines Montagewerkzeuges bzw. Demontagewerkzeuges, versehen ist.

10. Unterputzsifon nach Anspruch 9, dadurch gekennzeichnet, daß die Manipulationsansätze (26) als sich in Richtung der Mittelachse (22) der Einlauföffnung (3) erstreckende Nasen ausgebildet sind, wobei mindestens zwei Nasen um den Umfang des Stützringes (20) gleichmäßig verteilt angeordnet sind.

11. Unterputzsifon nach einem oder mehreren der Ansprüche 1 bis 3, dadurch gekennzeichnet, daß das Tauchrohr (7) einen sich etwa konzentrisch zur Mittelachse (22) der Einlauföffnung (3) erstreckenden Endteil (27) aufweist, auf den die Ringdichtung (16) von außen her aufschiebbar ist, wobei die Ringdichtung (16) mit einer zum Endteil (27) korrespondierend angeordneten umlaufenden Ringnut (28) versehen ist und der Endteil (27) in die Ringnut (28) einsetzbar ist (Fig. 3).

12. Unterputzsifon nach Anspruch 11, dadurch gekennzeichnet, daß der Endteil (27) mit einer umlaufenden Dicht-Stufe (29) versehen ist.

13. Unterputzsifon nach Anspruch 12, dadurch gekennzeichnet, daß die Dicht-Stufe von einem umlaufenden Stufenflansch (29) gebildet ist und die Ringnut (28) hierzu korrespondierend ausgebildet ist.

14. Unterputzsifon nach einem oder mehreren der Ansprüche 1 bis 13, dadurch gekennzeichnet, daß der Tauch-Rohrteil (9) des Tauchrohres (7) integral mit einem Steig-Rohrteil (30) nach der Art kommunizierender Gefäße unter Bildung eines Sifons ausgebildet ist (Fig. 4 bis 6).

15. Unterputzsifon nach einem oder mehreren der Ansprüche 1 bis 14, dadurch gekennzeichnet, daß die Einlauföffnung (3) einen Innendurchmesser (32) hat, der ein Einsetzen und Entfernen des Tauchrohres (7) bzw. des integral mit diesem verbundenen Steig-Rohrteiles (30) in das bzw. aus dem Gehäuse (1) ermöglicht, gegebenenfalls unter elastischer Verformung des Tauchrohres (7) bzw. des mit ihm integral zusammenhängenden Steig-Rohrteiles (30).

16. Unterputzsifon nach einem oder mehreren der Ansprüche 1 bis 15, dadurch gekennzeichnet, daß der Einlauf-Rohrteil (8) des Tauchrohres (7) einen Endteil (27) mit größerem Durchmesser aufweist als der übrige Einlauf-Rohrteil (8).

## Claims

1. Concealed siphon comprising a housing (1) having an inlet opening (3) and an outflow opening (4) and comprising an immersion pipe (7) of L-shaped design that can be inserted into the housing (1), wherein a roughly horizontal inlet pipe section (8) of the immersion pipe (7) from the inlet opening (3) arranged on a side wall (2) of the housing (1) runs into a roughly vertically arranged immersion pipe section (9) of the immersion pipe (7) and the inlet pipe section (8) is sealingly flow-connectable to a discharge pipe (15), such as a wash-basin discharge pipe, and wherein the outflow opening (4) of the housing (1) discharges into an outlet channel and the immersion pipe (7) is sealed both against the housing (1), at the inlet opening (3) of the same, and against the discharge pipe (15), characterized in that for sealing the immersion pipe (7) with respect to the housing (1) and the discharge pipe there is provided a single annular seal (16) made from a flexible material, which seal is provided with an insertion opening (17) for the discharge pipe (15) and is formed either in one piece with the immersion pipe (7) made from a flexible material or as a component which is separate from the immersion pipe and can be slipped on the immersion pipe (7) made from a rigid material.

2. Concealed siphon according to claim 1, characterized in that the insertion opening (17) is provided with at least one annular-flange sealing lip (18) which is directed inward and presses itself against the outside of the discharge pipe (15).

3. Concealed siphon according to claim 1 or 2, characterized in that the annular seal (16) is provided with an annular sealing flange (19) directed outwards and overlapping the housing wall (2) at the inlet opening (3).

4. Concealed siphon according to one or several of claims 1 to 3, characterized in that the immersion pipe (7) is made from rubber.

5. Concealed siphon according to one or several of claims 1 to 4, characterized in that the annular seal (16) is provided with an annular groove (21) that is open toward the exterior and that extends concentrically with respect to the central axis (22) of the inlet opening (3) and into which a supporting ring (20) can be inserted from outside.

6. Concealed siphon according to claim 5, characterized in that the supporting ring (20) exhibits an angle section.

7. Concealed siphon according to claim 6, characterized in that the supporting ring (20) comprises a ring portion (23) that is concentrically arranged with respect to the central axis (22) of the inlet opening (3) and than can be inserted into the correspondingly designed annular groove (21) of the annular seal (18), and furthermore an annular flange (24) extending roughly at right angles thereto and outwards.

8. Concealed siphon according to claim 7, characterized in that the annular flange (24) of the supporting ring (20) when installed is at least partially overlapped from within by an annular flange (25) of the annular seal (16).

9. Concealed siphon according to one or several of claims 5 to 8, characterized in that the supporting ring (20) is provided with manipulating lugs (26), particularly for engaging an assembling tool or a disassembling tool respectively.

10. Concealed siphon according to claim 9, characterized in that the manipulating lugs (26) are designed as noses extending in the direction of the central axis (22) of the inlet opening (3), at least two noses being arranged evenly distributed about the circumference of the supporting ring (20).

11. Concealed siphon according to one or several of claims 1 to 3, characterized in that the immersion pipe (7) is provided with an end portion (27) extending roughly concentrically with respect to the central axis (22) of the inlet opening (3) and onto which the annular seal (16) is slideable from outside, wherein the annular seal (16) is provided with an all-around annular groove (28) arranged so as to correspond with the end portion (27) and the end portion (27) is insertable into the annular groove (28) (Fig. 3).

12. Concealed siphon according to claim 11, characterized in that the end portion (27) is provided with an all-around sealing step (29).

13. Concealed siphon according to claim 12, characterized in that the sealing step is formed by an all-around step flange (29) and the annular groove (28) is designed such as to correspond thereto.

14. Concealed siphon according to one or several of claims 1 to 13, characterized in that the immersion pipe section (9) of the immersion pipe (7) is formed integrally with a rising pipe section (30) in the manner of communicating vessels under formation of a siphon (Figs. 4 to 6).

15. Concealed siphon according to one or several of claims 1 to 14, characterized in that the inlet opening (3) has an internal diameter (32) enabling the immersion pipe (7) or the rising pipe section (30) connected integrally therewith to be inserted into or removed from the housing (1), optionally while elastically deforming the immersion pipe (7) or the rising pipe section (30) connected integrally therewith.

16. Concealed siphon according to one or several of claims 1 to 15, characterized in that the inlet pipe section (8) of the immersion pipe (7) has an end portion (27) with a diameter in excess of that of the remaining inlet pipe section (8).

## Revendications

1. Siphon à encastrer comportant un boîtier (1) qui présente une ouverture d'entrée (3) et une ouverture de sortie (4), et comportant un tube plongeur (7) réalisé en forme de L et susceptible d'être mis en place dans le boîtier (1), dans lequel une partie tubulaire d'entrée approximativement horizontale (8) du tube plongeur (7) débouche de réouverture d'entrée (3) ménagée sur une paroi latérale (2) du boîtier (1) jusque dans une partie tubulaire de plongée approximativement verticale (9) du tube plongeur (7), et la partie tubulaire d'entrée (8) peut être branchée de manière étanche en communication avec un tube d'évacuation (15), tel qu'un tube d'évacuation de lavabo, et dans lequel l'ouverture de sortie (4) du boîtier (1) débouche dans un canal d'évacuation et le tube plongeur (7) est étanché par rapport au boîtier (1) sur son ouverture d'entrée (3) et également par rapport au tube d'évacuation (15), caractérisé en ce que pour étancher le tube plongeur (7) par rapport au boîtier (1) et au tube d'évacuation (15), il est prévu un seul joint d'étanchement annulaire en un matériau élastique souple qui comporte une ouverture d'enfichage (17) pour le tube d'évacuation (15) et qui est soit réalisé en une seule pièce en matériau élastique souple avec le tube plongeur (7), soit sous forme d'un composant séparé du tube plongeur, qui est enfichable sur le tube plongeur (7) en matériau rigide.

2. Siphon à encastrer selon la revendication 1, caractérisé en ce que l'ouverture d'enfichage (17) est pourvue d'au moins une lèvre d'étanchement à bride annulaire (18) qui est dirigée vers l'intérieur et qui vient se presser contre le tube d'évacuation (15).

3. Siphon à encastrer selon l'une ou l'autre des revendications 1 et 2, caractérisé en ce que le joint annulaire (16) comporte une bride d'étanchement annulaire (19) dirigée vers l'extérieur, qui coiffe la paroi de boîtier (2) au niveau de l'ouverture d'entrée (3).

4. Siphon à encastrer selon l'une ou plusieurs des revendications 1 à 3, caractérisé en ce que le tube plongeur (7) est constitué en caoutchouc.

5. Siphon à encastrer selon l'une ou plusieurs des revendications 1 à 4, caractérisé en ce que le joint annulaire (16) présente une gorge annulaire (21) ouverte vers l'extérieur et s'étendant concentriquement à l'axe médian (22) de l'ouverture d'entrée (3), gorge dans laquelle un anneau de soutien (20) peut être mis en place depuis l'extérieur.

6. Siphon à encastrer selon la revendication 5, caractérisé en ce que l'anneau de soutien (20) présente un profil en équerre.

7. Siphon à encastrer selon la revendication 6, caractérisé en ce que l'anneau de soutien (20) comporte une partie annulaire (23) qui est agencée concentriquement à l'axe médian (22) de l'ouverture d'entrée (3) et qui peut être mise en place dans la gorge annulaire (21), réalisée en correspondance, du joint annulaire (18), et en ce qu'il comporte en outre une bride annulaire (24) qui s'étend approximativement à angle droit par rapport à celui-ci et vers l'extérieur.

8. Siphon à encastrer selon la revendication 7, caractérisé en ce que, à l'état monté, la bride annulaire (24) de l'anneau de soutien (20) est du moins en partie coiffée depuis l'intérieur par une bride annulaire (25) du joint annulaire (16).

9. Siphon à encastrer selon l'une ou plusieurs des revendications 5 à 8, caractérisé en ce que l'anneau de soutien (20) est pourvu de reliefs de manipulation (26), en particulier pour appliquer un outil de montage ou un outil de démontage.

10. Siphon à encastrer selon la revendication 9, caractérisé en ce que les reliefs de manipulation (26) sont réalisés sous forme de becs qui s'étendent en direction de l'axe médian (22) de l'ouverture d'entrée (3), au moins deux becs étant agencés en répartition régulière à la périphérie de l'anneau de soutien (20).

11. Siphon à encastrer selon l'une ou plusieurs des revendications 1 à 3, caractérisé en ce que le tube plongeur (7) comporte une partie d'extrémité (27) qui s'étend approximativement concentriquement à l'axe médian (22) de l'ouverture d'entrée (3) et sur laquelle le joint annulaire (16) peut être enfilé depuis l'extérieur, le joint annulaire (16) étant pourvu d'une gorge annulaire périphérique (28) ménagée de façon correspondante à la partie d'extrémité (27), et la partie d'extrémité (27) étant susceptible d'être mise en place dans la gorge annulaire (28) (figure 3).

12. Siphon à encastrer selon la revendication 11, caractérisé en ce que la partie d'extrémité (27) est pourvue d'un gradin d'étanchement périphérique (29).

13. Siphon à encastrer selon la revendication 12, caractérisé en ce que le gradin d'étanchement est formé par une bride en gradin périphérique (29), et en ce que la gorge annulaire (28) est réalisée de façon correspondante à celle-ci.

14. Siphon à encastrer selon l'une ou plusieurs des revendications 1 à 13, caractérisé en ce que la partie tubulaire de plongée (9) du tube plongeur (7) est réalisée en une seule pièce avec une partie tubulaire montante (30), à la manière de vases communicants, en formant un siphon (figures 4 à 6).

15. Siphon à encastrer selon l'une ou plusieurs des revendications 1 à 14, caractérisé en ce que l'ouverture d'entrée (3) présente un diamètre intérieur (32) qui permet une mise en place et un enlèvement du tube plongeur (7) ou de la partie tubulaire montante (30) reliée en une seule pièce à celui-ci jusque dans le boîtier (1) ou hors de celui-ci, le cas échéant sous déformation élastique du tube plongeur (7) ou de la partie tubulaire montante (30) reliée en une seule pièce à celui-ci.

16. Siphon à encastrer selon l'une ou plusieurs des revendications 1 à 15, caractérisé en ce que la partie tubulaire d'entrée (8) du tube plongeur (7) comporte une partie d'extrémité (27) qui présente un diamètre supérieur à celui du reste de la partie tubulaire d'entrée (8).
